# EUROPEAN PATENT SPECIFICATION

(11) **EP 4 484 199 B1**
(45) Date of publication and mention of the grant of the patent: **11.02.2026**
(21) Application number: 24177658.2
(22) Date of filing: 23.05.2024
(51) Int. Cl.: B60K 15/07, B60K 15/03

(54) **TRUCK OR TRACTOR SEMI-TRAILER COMBINATION COMPRISING A PRESSURIZED FUEL STORAGE**
LASTKRAFTWAGEN- ODER TRAKTOR-SATTELANHÄNGER-KOMBINATION MIT EINEM KRAFTSTOFFSPEICHER UNTER DRUCK
COMBINAISON DE CAMION OU DE SEMI-REMORQUE AVEC UN RÉSERVOIR DE CARBURANT SOUS PRESSION

(30) Priority: 24.05.2023 NL 2034908
(43) Date of publication of application: 01.01.2025
(73) Proprietor: DAF Trucks N.V., 5643 TW Eindhoven (NL)
(72) Inventor: VAN DER KNAAP, Albertus Clemens Maria, 5643 TW Eindhoven (NL); WEIJENBORG, Bernardus Johannes Maria, 5643 TW Eindhoven (NL); LIEBREGTS, René Mathias Johannes, 5643 TW Eindhoven (NL); PERINI, Gustavo Pertile, 5643 TW Eindhoven (NL)
(74) Representative: V.O.

(56) References cited:
- WO-A1-2021/075970
- WO-A1-2021/108429
- WO-A1-2022/266241
- CA-C- 2 621 737
- CN-U- 212 195 082
- CN-U- 213 322 672
- CN-U- 218 316 250
- DE-A1- 102020 122 001
- DE-A1- 102021 207 941
- DE-A1- 102022 117 575
- US-B2- 10 449 853
- US-B2- 9 086 187

## Description

The invention relates to a truck or tractor semi-trailer combination interconnected via a fifth wheel, wherein a pressurized fuel storage is provided between a rear end of the cabin and the trailer.

Of particular interest are heavy load vehicles such as trucks. Trucks in general are used to transport heavy loads over long distances. Particularly in case of heavy duty long haulage applications so-called tractor semi-trailer combinations are used in which the tractor vehicle pulls and partly supports the payload that is packed onto the semi-trailer. In new generations of these trucks, fuel cells may provide an important contribution to the electrification of the drive train, since they are seen as a promising and increasing factor in providing electrical energy, in addition to battery setups.

The long travelling distances of these typical long haulage tractor semi-trailer combinations require large amounts of fuel on board of the vehicle. Especially when alternative fuel sources, such as hydrogen, are used for fuelling the fuel cells that generate the needed electric power to drive the electric motor based driveline, the ability to carry sufficient quantities of fuel becomes even more important due to the fairly poor volumetric energy density in comparison to conventional fossil fuels (like diesel). To increase the volumetric energy density of these hydrogen based fuels, normally gaseous hydrogen is pressurized and put into robust thick walled cylindrical container units that can withstand these high internal pressures. Pressure ranges typically from several bars in cryogenic (partly liquid) conditions, to about 350-700 bar for storage of gaseous hydrogen at room temperature. These cylindrically shaped tanks provide a new challenge for the commercial vehicle manufacturing industry to install these tank units on trucks as replacement for the well-known rectangular sheet metal manufactured ambient pressure filled diesel tanks in the quest to offer sufficient driving range without the need for intermediate refuelling stops at gasoline shops (with currently lacking or insufficient refuelling infrastructure).

The truck and in particular the tractor that pulls a semi-trailer is conventionally built upon a chassis formed by at least two elongate beams along a length of the truck. The chassis is the central mounting base of the truck to interconnect all main subsystems together, inter alia, providing a suspension mount for a suspension system that connects to unsprung masses such as the front and rear axles having (driven) wheels that put the total vehicle load on the road. The chassis is the main interaction element to transmit motions and forces that are acting between the miscellaneous components of truck assembly, while road inputs, either vertical, lateral and/or longitudinal, transmitted to the chassis via the unsprung masses, can be considered to be the main vibration excitation source. From a chassis durability point of view the latter aspect of unsprung mass, which is mainly excited via vertical road inputs while driving over road irregularities, is dominant in this respect as the related (poorly damped) unsprung mass wheel hop resonance mode causes an explicit excitation energy peak in the power spectral density function of chassis (deformation) vibrations. The longitudinal and lateral inputs are related to inertia forces acting in the centre of gravity of (heavy) sub-components that are attached the chassis, typically occurring during braking, accelerating and cornering. Also these input forces may give rise to considerable resonance modes and corresponding stresses in the entire chassis construction.

Such a chassis, comprising two longitudinal members connected by cross members, is a so called ladder frame. Over the main suspension this chassis is supported by the axles, in general a front and a rear axle. On the chassis may be mounted or suspended the truck cabin, the motor, batteries, trailer coupling, and many other components, and the chassis can also provide a mounting arrangement for mounting a pressurized fuel storage.

A ladder frame offers enough strength and durability for its use, but its slender shape brings an elasticity that allows the components fixed onto it to swing and vibrate. In this sense the torsional flex (along the longitudinal axis) and bending resilience (along the lateral axis) are the most problematic to control and design to an acceptable vehicle integration performance level. On a tractor unit these vibrations achieve even higher acceleration levels than on a truck fitted with a rigid body as the built-on body element significantly reinforces the chassis ladder frame.

Depending on the mounting arrangement of the fuel cell system, as well as the mass and structural design of the pressurized fuel storage, this provides a difficulty, since forces acting on the flexible chassis (e.g. due to driving on a rough road surface) may result as explained above in critical eigenmodes, which can cause damage to the pressurized fuel storage and/or any surrounding components. Also, Fuel Cell Electric vehicles (FCEV) may require an additional, pressurized (e.g. hydrogen based) fuel storage behind the cabin with its own specific resonance frequencies and when coinciding with critical eigenfrequencies of the vehicle, such as the wheel hop mode of the rear axle, this may adversely affect the dynamic behaviour of other components fixed on the ladder frame, as well as the dynamic behaviour of the truck in general. Accordingly, the durability, drivability and comfort of the truck are highly dependent on the mounting arrangements and (high) masses of the fuel cell system, and of the pressurized fuel storage in particular.

An example of a known holding frame for attaching high-pressure storage tanks to vehicles is described in DE102021207941.The problem to be solved is how to equip a long haulage truck or tractor semi-trailer combinations with a fuel cell system that has sufficient driving range, while limiting the effect on the durability (lifetime in relation to vibrations), drivability and comfort of the truck.

It is an objective of the claimed invention to solve one or more problems faced in the state of the art.

### SUMMARY

In summary, the invention provides a truck or tractor semi-trailer combination interconnected via a fifth wheel that provides at least one rotational yaw degree of freedom between a semi-trailer and a cabin of the truck, comprising a pair of longitudinal chassis members, a cabin and a pressurized fuel storage mounted to the pair of longitudinal chassis members between a rear end of the cabin and the semi-trailer. The pressurized fuel storage comprises opposing vessel mount structures extending from a top side of the pair of longitudinal chassis members and arranged for suspending an elongated pressure vessel in a lateral orientation. Each vessel mount structure comprises a strut mounted to a respective longitudinal chassis member and provided with a ring-shaped clearance for extending over a circumference of the elongated pressure vessel, and a frame providing a neck mount arranged for mounting an axial end of the elongated pressure vessel at a lateral offset from the strut. The struts are arranged for transferring a suspension force from the neck mounts to the pair of longitudinal chassis members, for thereby constraining a movement of the pressurized fuel storage with respect to the pair of longitudinal chassis members.

Accordingly, the axial ends of the laterally suspended elongated pressure vessel are mounted above the pair of longitudinal chassis members at a lateral offset from the struts, and hence from the respective longitudinal chassis member as well. This so-called neck mounting system constrains translatory displacements in x, y and z directions, per vessels side, but facilitates rotational movement, e.g. via a ball joint construction. One of these neck mounts may be elaborated with an axial sliding means to facilitate free expansion of the vessel during expansion related to pressure build-up an release, e.g. between 0-700 bar. Comparing a neck mount system to a conventional strap mount system at the cylindrical body of the vessel a big advantage of the neck mounts is no hindering of radial expansion of the diameter during pressure build-up and having a non-over-constrained fixation means, typically avoiding parasitic local mechanical peak stresses the hydrogen storage frame construction related to the chassis deformations. As such, suspension forces acting between the neck mounts and the pair of longitudinal chassis members are transferred via the struts and frames. This allows suspended elongated pressure vessels to expand and contract axially as well as radially, e.g. due to temperature and pressure variations, while providing a stable connection with the chassis. The thus formed cantilevered mounting arrangement allows the truck to be equipped with a plurality of elongated pressure vessels between the cabin and trailer, to increase the capacity of the pressurized fuel storage. Conversely, since the struts constrain a movement of the pressurized fuel storage with respect to the pair of longitudinal chassis members, e.g. to minimize the dynamic response of the truck due to movement of the pressurized fuel storage, and e.g. to prevent the pressurized fuel storage colliding against the cabin and/or the trailer, the effect of the suspended additional mass on the drivability, comfort and reliability/durability of the truck is minimized.

In other or further embodiments, the opposing vessel mount structures provide further neck mounts arranged for mounting axial ends of one or more further elongated pressure vessels above the laterally suspended elongated pressure vessel, wherein the struts are arranged for transferring a suspension force from the further neck mounts to the pair of longitudinal chassis members. Accordingly, the capacity of the pressurized fuel storage can be increased, e.g. by adding elongated pressure vessels suspended in a lateral or upright orientation, without modifying the above described mounting arrangement of the pressurized fuel storage to the chassis.

For example, in some variants, the further neck mounts are provided along opposing lateral sides of the pressurized fuel storage and configured to mount a pair of further elongated pressure vessels in an upright orientation. In this way, the volume between the cabin and trailer of the truck that is available for storing pressure vessels is optimally utilized, e.g. allowing a maximum diameter and length dimension of the further elongated pressure vessels, taking into account the perimeter of the trailer when rotated around the fifth wheel along the yaw degree of freedom. Instead of two further elongated pressure vessels located along the lateral sides of the pressurized fuel storage, the pressurized fuel storage can comprise only one further elongated pressure vessel, e.g. along one lateral side of the pressurized fuel storage. Alternatively, the pressurized fuel storage can comprise more than two further elongated pressure vessels. For example, one or more additional elongated pressure vessels can be arranged centrally, between the pair of further elongated pressure vessels along the lateral sides, e.g. in an upright or lateral orientation.

Preferably, each strut is mounted substantially in plane with the respective longitudinal chassis member. Accordingly, any suspension forces acting on the struts are transferred to the pair of longitudinal chassis members along a shortest force path, e.g. minimizing torques and bending stresses induced in the struts, to optimize the strength-to-mass ratio of the struts. This allows the total mass of the pressurized fuel storage to be reduced while increasing the stiffness of its mounting arrangement, thereby increasing the eigenfrequency of the pressurized fuel storage, e.g. to be distinct from the critical eigenfrequencies of the vehicle.

In some embodiments, the truck or tractor semi-trailer combination comprises a fixation mechanism between the opposing vessel mount structures and the pair of longitudinal chassis members, wherein the fixation mechanism comprises opposing brackets that connect the struts to the pair of longitudinal chassis members. By having a fixation mechanism that is separate from both the pressurized fuel storage as well as the longitudinal chassis members, based on a particular truck configuration individual brackets can e.g. be designed for strength and stiffness, manufactured and assembled to the truck, and disassembled for service or replacement. Accordingly, a mounting arrangement is provided that is both configurable, as well as easy to apply and service. For example, the opposing brackets can be provided with one or more further mounts, e.g. for suspending a fuel cell unit, or for suspending other structural elements or vehicle components, like connecting mud guards for the wheels and even provide (integrated) bracket means for carrying and fixation of one or more chassis sided pressurized fuel tanks.

For example, in some embodiments, upstream of the pressurized fuel storage, the opposing brackets may be interconnected by a cabin bridge arranged for mounting the cabin (e.g. via springs and dampers) to the pair of longitudinal chassis members, wherein the cabin bridge extends laterally across and above the pair of longitudinal chassis members along a substantially straight line.

Furthermore installing sufficient cooling means (relatively more cooling power may be needed for fuel cell electric powertrains in comparison to conventional diesel based powertrains) for conditioning the fuel cells at a relatively low operating temperature poses a further packaging challenge in combination with the fairly big sized fuel storage system. For this reason, the pressurized fuel storage may further comprise cooling system mounts arranged for mounting a cooling system for cooling fuel cells of the truck or tractor semi-trailer combination, wherein the struts are arranged for transferring a suspension force from the cooling system mounts to the pair of longitudinal chassis members. In this way, cooling system components such as remote radiators for additional cooling performance of the chassis integrated fuel cell system can be accommodated in a compact fashion.

In some embodiments, the pressurized fuel storage is provided with one or more cowls extending between opposing neck mounts, wherein each cowl is arranged for guiding intake air alongside suspended elongated pressure vessels towards the cooling system. For example, the frame of the opposing vessel mount structures may be provides with curved plates or sheets configured to extend partially over the circumference of suspended elongated pressure vessels, thereby forming a cowl, or air guiding channel, for collecting and guiding intake air, such as driving wind, from inlet ports towards the cooling system. By having the cowls extending between opposing neck mounts, any forces on the cowls, e.g. due to driving wind being guided towards the cooling system, are transferred from the neck mounts via the struts towards the pair of longitudinal chassis members. Accordingly, besides providing a stable base for suspended elongated pressurized vessels, the mounting arrangement described herein can also provide a stable base for guiding airflow.

In some embodiments, the pressurized fuel storage comprises a reinforcement plate that interconnects the opposing vessel mount structures, wherein the reinforcement plate extends laterally between the struts substantially parallel to the top side of the pair of longitudinal chassis members. The reinforcement plate may be slightly curved to provide a compact assembly for suspending an elongated pressure vessel, and/or may be provided with a truss structure to reduce mass. In this way, additional stiffness is provided in a plane parallel to the top side, e.g. to minimize "skating" movement of the pair of ring-shaped struts (a displacement along the longitudinal direction and/or a rotation around the upright direction), and/or e.g. to minimize lateral movement of the pair of ring-shaped struts with respect to each other. In this sense also the skating stiffness of the chassis ladder frame is significantly enhanced, making the application of robust heavy central cross member (also known as "K-member") in the middle of the chassis abundant. The result is a maximised available packaging space for a fuel cell system to be placed in the centre of the chassis whilst saving on weight, cost and assembly complexity of the overall truck chassis.

In other or further embodiments, the truck or tractor semi-trailer combination comprises a cross member extending laterally between the pair of longitudinal chassis members downstream of the pressurized fuel storage, wherein the cross member is a sheet metal plate. By having such a relatively slender cross member mounted between the pair of longitudinal chassis members, instead of a conventional cross beam (K-member), the ladder frame is sufficiently strengthened at a critical spot whilst the volume between the pair of longitudinal chassis members that is available for suspending components of the truck, such as a fuel cell unit or a power junction unit, is increased with minimum packaging space penalty. Conventional cross beams in a ladder frame may be designed for providing in plane stiffness to the ladder frame. As explained, when the base portion of the pressurized fuel storage comprises a reinforcement plate as described herein, the in-plane stiffness (parallel to the top side) is provided by the reinforcement plate. Accordingly, the conventional cross beam can be replaced by a more slender cross beam, with a relatively lower stiffness, yet dimensioned for optimizing storage volume between the pair of longitudinal chassis members.

### BRIEF DESCRIPTION OF THE DRAWINGS

The invention will be further elucidated in the figures:
FIG 1 illustrates an embodiment of a truck comprising a pressurized fuel storage;
FIGs 2A-B illustrate a front and rear view, respectively, of an embodiment of the pressurized fuel storage described herein;
FIG 3 illustrates another or further embodiment of the pressurized fuel storage described herein, comprising a slender sheet metal cross member;
FIGs 4A-C illustrate yet other or further embodiments of the pressurized fuel storage described herein, comprising a fixation mechanism.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

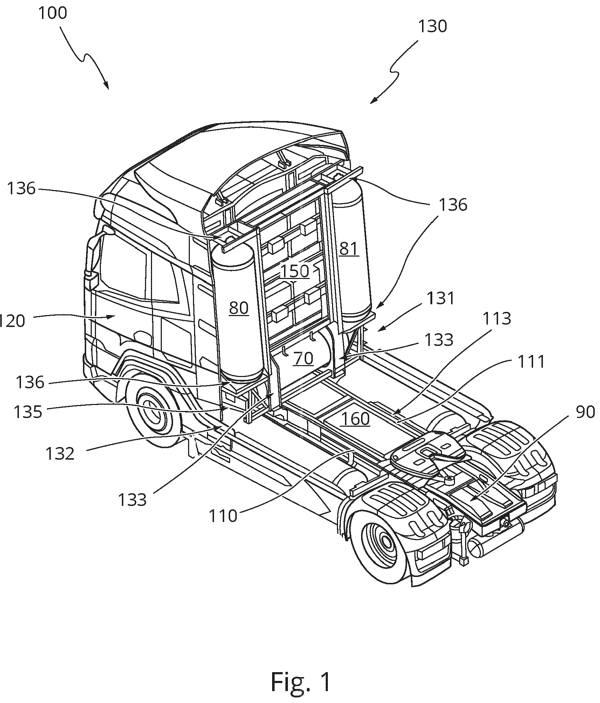

FIG 1 illustrates a heavy load vehicle 100, such as a truck or tractor 100 of a semi-trailer combination interconnected via a fifth wheel 105, that provides at least one rotational yaw degree of freedom between the truck 100 and a semi-trailer (not shown) suspended to the fifth wheel 105. Preferably, the truck 100 comprises an electrified drive train, e.g. at least partially driven by an electric motor. For example, the truck 100 may comprise an electric motor 90 arranged for driving a rear axle of the truck 100 or tractor semi-trailer combination, e.g. as an E-axle. Such an electric motor 90 can e.g. be powered by fuel cells, which in turn are fuelled by an alternative fuel source such as hydrogen to be stored on board of the truck 100.

For this purpose, the truck or tractor 100 comprises a pressurized fuel storage 130 mounted to the pair of longitudinal chassis members 110, 111 preferably in a cantilevered fashion, e.g. fixed at only one end of the pressurized fuel storage 130, extending upright from the pair of longitudinal chassis members 110, 111, between a rear end of the cabin 120 and a front end of a semi-trailer suspended to the fifth wheel 105. To minimize interaction with the cabin and trailer, the pressurized fuel storage 130 is independently mounted to the pair of longitudinal chassis members 110, 111, without being mounted or otherwise dynamically coupled to the cabin or trailer. In this way, the dynamic behaviour of the cabin and the trailer are least affected by the pressurized fuel storage 130 mounted therebetween.

The pressurized fuel storage 130 comprises opposing vessel mount structures 131, 132 extending from a top side 113 of the pair of longitudinal chassis members 110, 111 and arranged for suspending an elongated pressure vessel 70 in a lateral orientation, e.g. substantially parallel to the top side 113 of the pair of longitudinal chassis members 110, 111.

Each vessel mount structure 131, 132 comprises a strut 133 mounted to a respective longitudinal chassis member 110, 111 and provided with a ring-shaped clearance. The ring-shaped clearance may be dimensioned to be slightly larger than an outer diameter of the elongated pressure vessel 70, e.g. 1-10% larger, preferably 3-5% larger. Accordingly, the strut 133 is arranged for extending over a circumference of the suspended laterally oriented elongated pressure vessel 70. The ring-shaped clearance does not need to be circular, but may also be slightly oval or rectangular for example. The outer contour of the strut 133 is adapted for mounting to the respective longitudinal chassis member 110, 111 and does not necessarily correspond with the outer diameter of the elongated pressure vessel.

Each vessel mount structure 131, 132 further comprises a frame, e.g. a box frame or a truss structure, that laterally extends from the strut 133 towards an exterior side of the pressurized fuel storage 130, and provides a neck mount 135 arranged for mounting an axial end of the elongated pressure vessel 70 at a lateral offset from the strut 133, e.g. near a lateral side of the pressurized fuel storage. In some embodiments, e.g. as illustrated in FIG. 1, the opposing vessel mount structures 131, 132 provide further neck mounts 136 arranged for mounting axial ends of one or more further elongated pressure vessels 80, 81 above the struts 133, e.g. to suspend the one or more further elongated pressure vessels 80, 81 in an upright or lateral orientation. For example, the frame may extend upward from the struts 133 and may provide further neck mounts 136 in a top section of the pressurised fuel storage 130, e.g. for mounting axial ends of further elongated pressure vessels in an upright orientation. Alternatively, or additionally, additional struts with ring-shaped clearances may extend upward from the struts 133, e.g. forming a stack of struts, and further neck mounts may be provided by frames extending from the additional struts to a lateral offset, e.g. for mounting axial ends of further elongated pressure vessels in a lateral orientation.

As a result, the fuel storage system described herein has an explicit off-centre location of the centre of gravity above the chassis ladder frame which may well give rise to a poorly damped pitch and/or yaw resonance mode when not properly stiff and stable designed in its connection to the flexible chassis. In order to provide a stable mounting arrangement for this configuration, the structural design of the pressurized fuel storage is challenging considering the relatively short available distance (in longitudinal direction of the vehicle) and tight (and yet occupied) packaging space of the fuel storage between cabin and semi-trailer.

Preferably, each strut is mounted substantially in plane with the respective longitudinal chassis member, such that the length of the force path between the neck mounts 135, 136 and the pair of longitudinal chassis members 110, 111 is minimalized, while torques and bending stresses in the struts (as well as in the pair of longitudinal chassis members) are minimized.

Note that the suspended elongated pressure vessel 70 is not directly supported by the struts 133. Instead, the ring-shaped clearance prevents contact between the strut and the pressure vessel. In contrast to a conventional strap mount suspension, in which the pressure vessel is supported over (a part of) its circumference, the present mounting arrangement suspends the elongated pressure vessel 70 only at its axial ends, e.g. between opposing plates or brackets. The thus formed neck mount suspension allows the elongate pressure vessel 70 expand and contract, e.g. due to temperature or pressure variations. In particular, the neck mounts 135, 136 provide a statically determined mounting arrangement which allows radial as well as axial expansion and contraction of the suspended elongated pressure vessel, without inducing additional stresses. However, the gap between the ring-shaped clearance and the outer surface of the elongated pressure vessel may be provided with a filler material, e.g. a foam material, without significantly contributing to the suspension of the pressure vessel.

As illustrated, the neck mounts 135, 136 are connected via the frames and the struts 133 to the pair of longitudinal chassis members 110, 111 over a circumference of the elongated (lateral) pressure vessel 70. The struts 133 provide a particularly stiff and strong structure for transferring suspension forces (e.g. in longitudinal, lateral or vertical direction), e.g. due to a mass and/or dynamic behavior of the suspended pressure vessels 70, 80, 81, from the neck mounts 135, 136 to the pair of longitudinal chassis members 110, 111. Accordingly, the struts 133 constrain a movement of the pressurized fuel storage 130 with respect to the pair of longitudinal chassis members 110, 111, e.g. to minimize the dynamic response of the truck due to movement of the pressurized fuel storage, and e.g. to prevent the pressurized fuel storage colliding against the cabin and/or the trailer.

The present disclosure thus provides a stable and configurable mounting arrangement of the fuel cell system that reduces the effect of forces acting on the flexible chassis (e.g. due to driving on a rough road surface) resulting in critical eigenmodes, which can cause damage to the pressurized fuel storage and/or any surrounding components.

For example the wheel hop mode of the rear axle, typically located in the frequency range between 8 and 12 Hz, may be particularly cumbersome as an excitation source. For Fuel Cell Electric Vehicles (FCEV) driven by an e-Axle (the electric motor that drives the rear wheels is directly integrated into the axle member housing), the relatively heavy e-Axle significantly increases the unsprung mass (typically 400 to 600 kg heavier) in comparison to a conventional axle which comprises a differential gear connected to the propeller shaft of the internal combustion engine. Due to the increased unsprung mass, the critical eigenfrequency of the poorly damped wheel hop mode will decrease, e.g. from 10-12 Hz to 8-10 Hz. The eigenfrequency of the proposed strut 133 based hydrogen storage system behind the cabin described herein should preferably be tuned to be distinct from and well above the vehicle's critical eigenfrequency dictated by the rear axle wheel hop mode, to prevent damage to the pressurized fuel storage and/or surrounding components, like fuel cell system and chassis sided hydrogen tanks.

In some embodiments, e.g. as illustrated in FIG 1, the further neck mounts 136 are arranged for suspending a pair of second elongated pressure vessels 80, 81 along lateral sides of the pressurized fuel storage, e.g. on opposing sides of the struts 133, e.g. adjacent to, or flush with, an exterior lateral side of the cabin 120. In other or further embodiments, the further neck mounts 136 are arranged for suspending one elongated pressure vessel, or more than two elongated pressure vessels, in an upright orientation.

In yet other or further embodiments, a cooling system 150 is suspended between the struts 133, e.g. above the laterally suspended elongated pressure vessel 70, wherein the cooling system 150 is arranged for cooling fuel cells of the truck 100 or tractor semi-trailer combination. For example, the truck 100 can comprise a fuel cell unit 160 including one or more fuel cells operably connected to the pressurized fuel storage 130. The fuel cell unit 160 may be mounted below the pressurized fuel storage 130 and may extend between the pair of longitudinal chassis members 110, 111 in a downstream direction at an offset below the top side 113 of the pair of longitudinal chassis members 110, 111.

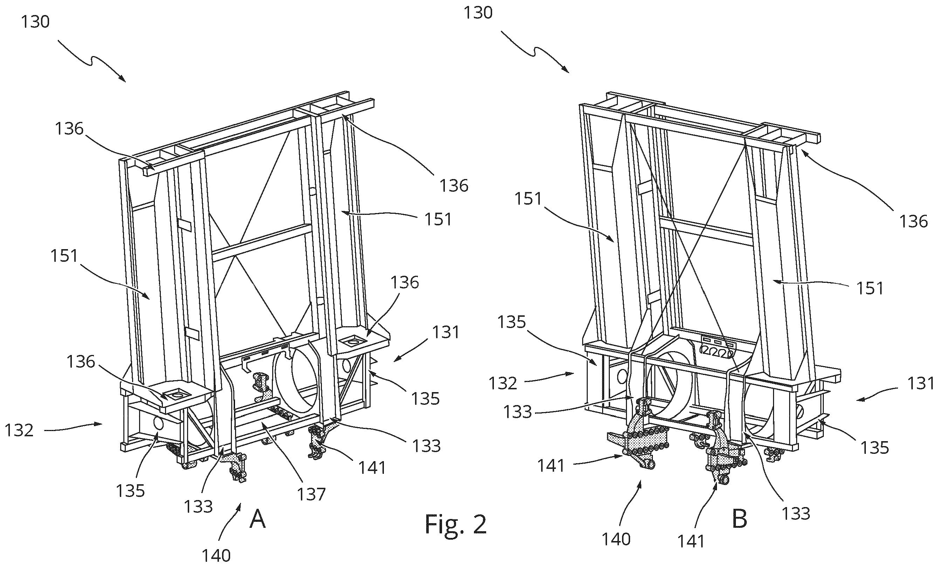

FIGs 2A and B illustrate a front side and rear side view, respectively, of another or further embodiment of a pressurized fuel storage 130 as described herein (for reasons of clarity the actual pressurized fuel vessels are not shown in these pictures). In FIGs 2A-B, the pressurized fuel storage 130 is depicted in a state in which it does not suspend first or second elongated pressure vessels, and in which it is not mounted to the pair of longitudinal chassis members of a truck or tractor. However, FIGs 2A-B illustrates that a fixation mechanism 140, e.g. comprising one or more brackets 141, can be provided at a bottom side of the base portion 131 for mounting the struts 133 to the pair of longitudinal chassis members. For example, the fixation mechanism comprises a plurality of fasteners such as bolts or screws extending along the lateral orientation, perpendicular to the longitudinal driving direction of the truck, for mounting the one or more brackets to the pair of longitudinal chassis beams.

As illustrated, a reinforcement plate 137 extends between the pair of ring-shaped struts 133. The reinforcement plate may be slightly curved or bent to accommodate a suspended elongated pressure vessel in a compact fashion, and may be provided with a truss structure to increase the in-plane stiffness of the reinforcement plate without significantly adding mass. When the pressurized fuel storage 130 is mounted to the pair of longitudinal chassis members of a truck, the reinforcement plate 137 extends substantially parallel to the top side of the pair of longitudinal chassis members. For example, the reinforcement plate 137 may be in plane of the top side, e.g. extending below the laterally suspended elongated pressure vessel. Alternatively, or additionally, a reinforcement plate 137 may be mounted at a distance parallel to the top side, e.g. extending above the laterally suspended elongated pressure vessel. In this way, the reinforcement plate 137 provides additional stiffness to the pressurized fuel storage in plane of the top side, e.g. to prevent "skating", or a relative movement of the struts 133 in plane of the top side with respect to each other, e.g. a displacement along the longitudinal or lateral direction, or a rotation around the upright direction. It is also noted that this reinforcement plate 137 may even have slightly bended and sloped parts, e.g. extending along the cylindrical shape of the first lateral pressurized fuel vessel to accommodate for horizontal placement of this cylinder accordingly and yet still provide sufficient skating stiffness as shown in the embodiments of FIG 2A and B.

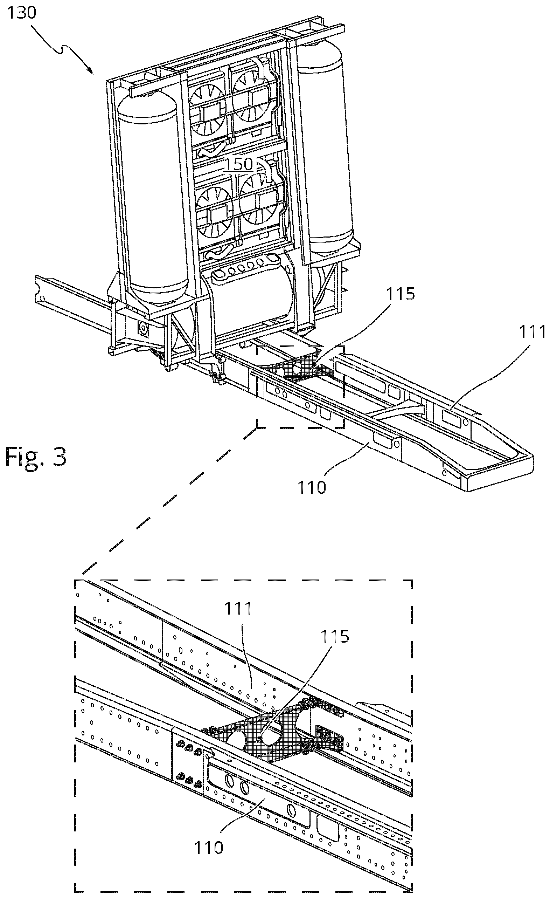

Also, the reinforcement plate 137 reinforces, or provides additional stiffness, to the pair of longitudinal chassis members 110, 111. For this reason, as illustrated in FIG 3, in some embodiments the truck may comprise a cross member 115 extending laterally between the pair of longitudinal chassis members 110, 111 downstream of the pressurized fuel storage 130, wherein the cross member is a sheet metal plate, e.g. forming a relatively slender cross member 115. In this way, the volume between the longitudinal chassis member 110, 111 that is available for suspending components of the truck 100, such as fuel cells, is increased.

The frame of the opposing vessel mount structures may be provided with curved or bent plates, e.g. reinforced by a truss structure, that extend along suspended elongated pressure vessels and between opposing neck mounts 135, 136, as illustrated in FIG. 2A and B. As such, one or more cowls 151 are formed to guide intake air, e.g. driving wind, towards the cooling system 150.

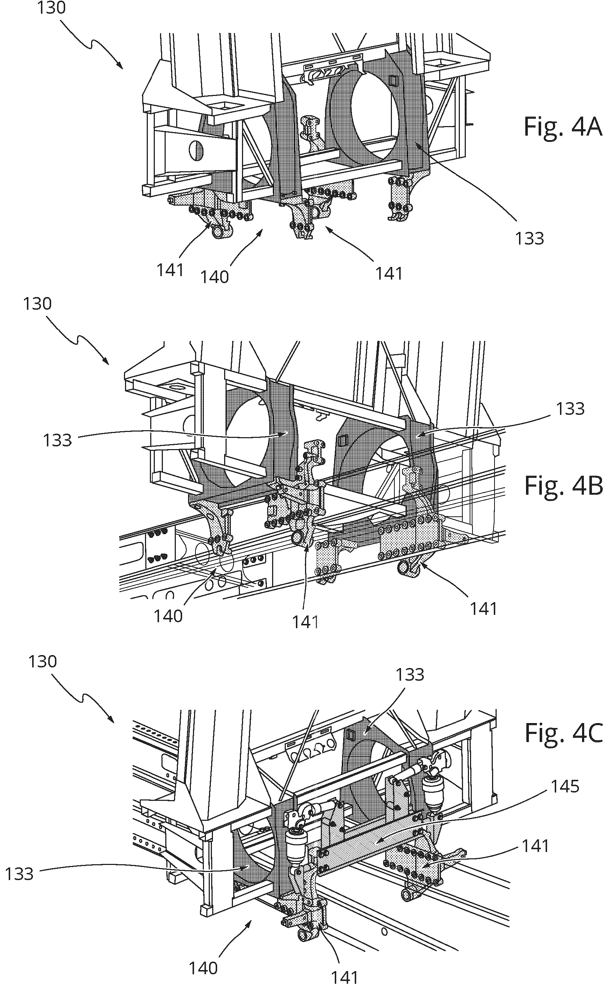

FIGs 4A-C provide detailed views of embodiments of the pressurized fuel storage 130 described herein, and in particular illustrate that the pressurized fuel storage 130 may comprise a fixation mechanism 140 for mounting the pair of ring-shaped struts 133 to the pair of longitudinal chassis members 110, 111. Preferably, the fixation mechanism comprises one or more opposing brackets 141 that connect the pair of ring-shaped struts to the pair of longitudinal chassis members, as illustrated in FIGs 4A-C.

In some embodiments, e.g. as illustrated in FIG 4C, the opposing strut mounts 141 are interconnected by a cabin bridge 145 upstream of the pressurized fuel storage 130. The cabin bridge 145 e.g. extends laterally across and above the pair of longitudinal chassis members 110, 111 along a substantially straight line. The cabin bridge may be arranged for mounting the cabin to the pair of longitudinal chassis members 110, 111, e.g. by cabin suspension means such as rockers, springs and/or dampers.

The fixation mechanism 140 may further provide one or more fuel cell mounts 148 for mounting fuel cells or other components of the vehicle, e.g. below the pressurized fuel storage 130 and between the pair of longitudinal chassis members 110, 111.

The indicated strut mounts 141 are preferably made of a mouldable material, such as cast iron, allowing for optimal forming freedom and function integration of multiple bracket systems into one central stiff and strong assembly and at low weight and costs.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive applications where the pressurized fuel storage mounting arrangement is used for mounting a fuel cell system to a truck, but also to other technical, agricultural or industrial applications where a cantilevered mounting arrangement is used. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck or tractor semi-trailer combination (100) interconnected via a fifth wheel (105) that provides at least one rotational yaw degree of freedom between a semi-trailer and a cabin of the truck, comprising a pair of longitudinal chassis members (110, 111), a cabin (120) and a pressurized fuel storage (130) mounted to the pair of longitudinal chassis members (110, 111) between a rear end of the cabin (120) and the semi-trailer, wherein the pressurized fuel storage (130) comprises opposing vessel mount structures (131, 132) extending from a top side (113) of the pair of longitudinal chassis members and arranged for suspending an elongated pressure vessel (70) in a lateral orientation, wherein each vessel mount structure (131, 132) comprises a strut (133) mounted to a respective longitudinal chassis member (110, 111) and provided with a ring-shaped clearance for extending over a circumference of the elongated pressure vessel (70), **characterized in that** each vessel mount structure (131, 132) comprises a frame that laterally extends from the strut (133) towards an exterior side of the pressurized fuel storage (130) and provides a neck mount (135) arranged for mounting an axial end of the elongated pressure vessel (70) at a lateral offset from the strut (133), wherein the elongated pressure vessel (70) is suspended only at its axial ends and the ring-shaped clearance prevents contact between the strut (133) and the elongated pressure vessel (70), wherein the struts (133) are arranged for transferring a suspension force from the neck mounts (135) to the pair of longitudinal chassis members (110, 111), for thereby constraining a movement of the pressurized fuel storage (130) with respect to the pair of longitudinal chassis members (110, 111).

2. The truck or tractor semi-trailer combination (100) according to claim 1, wherein the opposing vessel mount structures (131, 132) provide further neck mounts (136) arranged for mounting axial ends of one or more further elongated pressure vessels (80, 81) above the laterally suspended elongated pressure vessel (70), wherein the struts (133) are arranged for transferring a suspension force from the further neck mounts (136) to the pair of longitudinal chassis members (110, 111).

3. The truck or tractor semi-trailer combination (100) according to claim 2, wherein the further neck mounts (136) are provided along opposing lateral sides of the pressurized fuel storage (130) and configured to mount a pair of further elongated pressure vessels in an upright orientation.

4. The truck or tractor semi-trailer combination (100) according to any preceding claim, wherein each strut (133) is mounted substantially in plane with the respective longitudinal chassis member (110, 111).

5. The truck or tractor semi-trailer combination (100) according to any preceding claim, comprising a fixation mechanism (140) between the opposing vessel mount structures (131, 132) and the pair of longitudinal chassis members (110, 111), wherein the fixation mechanism (140) comprises opposing brackets (141) that connect the struts (133) to the pair of longitudinal chassis members (110, 111).

6. The truck or tractor semi-trailer combination (100) according to claim 5, wherein, upstream of the pressurized fuel storage (130), the opposing brackets (141) are interconnected by a cabin bridge (145) arranged for mounting the cabin (120) to the pair of longitudinal chassis members (110, 111), wherein the cabin bridge (145) extends laterally across and above the pair of longitudinal chassis members (110, 111) along a substantially straight line.

7. The truck or tractor semi-trailer combination (100) according to any preceding claim, wherein the pressurized fuel storage (130) further comprises cooling system mounts arranged for mounting a cooling system (150) for cooling fuel cells of the truck or tractor semi-trailer combination, wherein the struts (133) are arranged for transferring a suspension force from the cooling system mounts to the pair of longitudinal chassis members (110, 111).

8. The truck or tractor semi-trailer combination (100) according to claim 7, wherein the pressurized fuel storage (130) is provided with one or more cowls (151) extending between opposing neck mounts (135, 136), wherein each cowl (151) is arranged for guiding intake air alongside suspended elongated pressure vessels (70, 80, 81) towards the cooling system (150).

9. The truck or tractor semi-trailer combination (100) according to any preceding claim, comprising a fuel cell unit (160) including one or more fuel cells operably connected to the pressurized fuel storage (130), wherein the fuel cell unit (160) is mounted below the pressurized fuel storage (130) and extends between the pair of longitudinal chassis members (110, 111) in a downstream direction at an offset below the top side (113) of the pair of longitudinal chassis members.

10. The truck or tractor semi-trailer combination (100) according to any preceding claim, wherein each strut (133) is provided with a ring-shaped clearance that is larger than an outer diameter of the elongated pressure vessel (70), to allow radial expansion and contraction of the suspended elongated pressure vessel (70).

11. The truck or tractor semi-trailer combination (100) according to any preceding claim, wherein the pressurized fuel storage (130) comprises a reinforcement plate (137) that interconnects the opposing vessel mount structures (131, 132), wherein the reinforcement plate (137) extends laterally between the struts (133) substantially parallel to the top side (113) of the pair of longitudinal chassis members.

12. The truck or tractor semi-trailer combination (100) according to any preceding claim, comprising a cross member (115) extending laterally between the pair of longitudinal chassis members (110, 111) downstream the pressurized fuel storage (130), wherein the cross member (115) is a sheet metal plate.

## Patentansprüche

1. Lastkraftwagen- oder Zugmaschine-Sattelanhänger-Kombination (100), miteinander verbunden über eine Sattelkupplung (105), die wenigstens einen Rotations-Gier-Freiheitsgrad zwischen einem Sattelanhänger und einer Kabine des Lastkraftwagens bietet, umfassend ein Paar von Fahrgestelllängsträgern (110, 111), eine Kabine (120) und einen Kraftstoffspeicher (130) unter Druck, der an dem Paar von Fahrgestelllängsträgern (110, 111) zwischen einem hinteren Ende der Kabine (120) und dem Sattelanhänger montiert ist, wobei der Kraftstoffspeicher (130) unter Druck gegenüberliegende Behälterbefestigungsstrukturen (131, 132) umfasst, die sich von einer Oberseite (113) des Paares von Fahrgestelllängsträgern erstrecken und zum Aufhängen eines länglichen Druckbehälters (70) in einer seitlichen Ausrichtung angeordnet sind,
wobei jede Behälterbefestigungsstruktur (131, 132) eine Strebe (133) umfasst, montiert an einem jeweiligen Fahrgestelllängsträger (110, 111) und mit einem ringförmigen Abstand zur Erstreckung über einen Umfang des länglichen Druckbehälters (70) versehen, **dadurch gekennzeichnet, dass** jede Behälterbefestigungsstruktur (131, 132) einen Rahmen umfasst, der sich seitlich von der Strebe (133) in Richtung einer Außenseite des Kraftstoffspeichers (130) unter Druck erstreckt und eine Halsbefestigung (135) bereitstellt, die zur Befestigung eines axialen Endes des länglichen Druckbehälters (70) in einem seitlichen Versatz zur Strebe (133) angeordnet ist, wobei der längliche Druckbehälter (70) nur an seinen axialen Enden aufgehängt ist und der ringförmige Abstand einen Kontakt zwischen der Strebe (133) und dem länglichen Druckbehälter (70) verhindert, wobei die Streben (133) zur Übertragung einer Aufhängungskraft von den Halsbefestigungen (135) zu dem Paar Fahrgestelllängsträger (110, 111) angeordnet sind, um dadurch eine Bewegung des Kraftstoffspeichers (130) unter Druck in Bezug auf das Paar von Fahrgestelllängsträgern (110, 111) einzuschränken.

2. Lastkraftwagen- oder Zugmaschine-Sattelanhänger-Kombination (100) nach Anspruch 1, wobei die gegenüberliegenden Behälterbefestigungsstrukturen (131, 132) weitere Halsbefestigungen (136) bereitstellen, angeordnet zum Befestigen axialer Enden eines oder mehrerer weiterer länglicher Druckbehälter (80, 81) oberhalb des seitlich aufgehängten länglichen Druckbehälters (70), wobei die Streben (133) angeordnet sind, um eine Aufhängungskraft von den weiteren Halsbefestigungen (136) zu dem Paar von Fahrgestelllängsträgern (110, 111) zu übertragen.

3. Lastkraftwagen- oder Zugmaschine-Sattelanhänger-Kombination (100) nach Anspruch 2, wobei die weiteren Halsbefestigungen (136) entlang gegenüberliegender lateraler Seiten des Kraftstoffspeichers (130) unter Druck bereitgestellt sind und dazu konfiguriert sind, ein Paar weiterer länglicher Druckbehälter in einer aufrechten Ausrichtung zu montieren.

4. Lastkraftwagen- oder Zugmaschine-Sattelanhänger-Kombination (100) nach einem der vorhergehenden Ansprüche, wobei jede Strebe (133) im Wesentlichen plan zu dem jeweiligen Fahrgestelllängsträger (110, 111) montiert ist.

5. Lastkraftwagen- oder Zugmaschine-Sattelanhänger-Kombination (100) nach einem der vorhergehenden Ansprüche, umfassend einen Befestigungsmechanismus (140) zwischen den gegenüberliegenden Behälterbefestigungsstrukturen (131, 132) und dem Paar von Fahrgestelllängsträgern (110, 111), wobei der Befestigungsmechanismus (140) gegenüberliegende Halterungen (141) umfasst, die die Streben (133) mit dem Paar von Fahrgestelllängsträgern (110, 111) verbinden.

6. Lastkraftwagen- oder Zugmaschine-Sattelanhänger-Kombination (100) nach Anspruch 5, wobei, dem Kraftstoffspeicher (130) unter Druck vorgelagert, die gegenüberliegenden Halterungen (141) durch eine Kabinenbrücke (145), angeordnet zur Befestigung der Kabine (120) an dem Paar von Fahrgestelllängsträgern (110, 111), miteinander verbunden sind, wobei sich die Kabinenbrücke (145) seitlich über und oberhalb des Paares von Fahrgestelllängsträgern (110, 111) entlang einer im Wesentlichen geraden Linie erstreckt.

7. Lastkraftwagen- oder Zugmaschine-Sattelanhänger-Kombination (100) nach einem der vorhergehenden Ansprüche, wobei der Kraftstoffspeicher (130) unter Druck ferner Kühlsystembefestigungen umfasst, angeordnet zur Befestigung eines Kühlsystems (150) zum Kühlen von Brennstoffzellen der Lastkraftwagen- oder Zugmaschine-Sattelanhänger-Kombination, wobei die Streben (133) zum Übertragen einer Aufhängungskraft von den Kühlsystemaufnahmen auf das Paar Fahrgestelllängsträger (110, 111) angeordnet sind.

8. Lastkraftwagen- oder Zugmaschine-Sattelanhänger-Kombination (100) nach Anspruch 7, wobei der Kraftstoffspeicher (130) unter Druck mit einer oder mehreren Hauben (151) versehen ist, die sich zwischen gegenüberliegenden Halsbefestigungen (135, 136) erstrecken, wobei jede Haube (151) zum Führen von Ansaugluft entlang aufgehängter länglicher Druckbehälter (70, 80, 81) in Richtung des Kühlsystems (150) angeordnet ist.

9. Lastkraftwagen- oder Zugmaschine-Sattelanhänger-Kombination (100) nach einem der vorhergehenden Ansprüche, umfassend eine Brennstoffzelleneinheit (160), die eine oder mehrere Brennstoffzellen umfasst, die betriebsbereit mit dem Kraftstoffspeicher (130) unter Druck verbunden sind, wobei die Brennstoffzelleneinheit (160) unterhalb des Kraftstoffspeichers (130) unter Druck montiert ist und sich zwischen dem Paar von Fahrgestelllängsträgern (110, 111) in einer Stromabwärtsrichtung versetzt unterhalb der Oberseite (113) des Paares von Fahrgestelllängsträgern erstreckt.

10. Lastkraftwagen- oder Zugmaschine-Sattelanhänger-Kombination (100) nach einem der vorhergehenden Ansprüche, wobei jede Strebe (133) mit einem ringförmigen Abstand versehen ist, der größer als ein Außendurchmesser des länglichen Druckbehälters (70) ist, um eine radiale Ausdehnung und Kontraktion des aufgehängten länglichen Druckbehälters (70) zu erlauben.

11. Lastkraftwagen- oder Zugmaschine-Sattelanhänger-Kombination (100) nach einem der vorhergehenden Ansprüche, wobei der Kraftstoffspeicher (130) unter Druck eine Verstärkungsplatte (137) umfasst, die die gegenüberliegenden Behälterbefestigungsstrukturen (131, 132) miteinander verbindet, wobei sich die Verstärkungsplatte (137) lateral zwischen den Streben (133) im Wesentlichen parallel zur Oberseite (113) des Paares von Fahrgestelllängsträgern erstreckt.

12. Lastkraftwagen- oder Zugmaschine-Sattelanhänger-Kombination (100) nach einem der vorhergehenden Ansprüche, umfassend einen Querträger (115), der sich lateral zwischen dem Paar von Fahrgestelllängsträgern (110, 111), dem Kraftstoffspeicher (130) unter Druck nachgelagert, erstreckt, wobei der Querträger (115) ein Metallblech ist.

## Revendications

1. Combinaison de camion ou de tracteur semi-remorque (100) interconnectée via une cinquième roue (105) qui fournit au moins un degré de liberté de lacet de rotation entre une semi-remorque et une cabine du camion, comprenant une paire d'éléments de châssis longitudinaux (110, 111), une cabine (120) et un stockage de combustible sous pression (130) montés sur la paire d'éléments de châssis longitudinaux (110, 111) entre une extrémité arrière de la cabine (120) et la semi-remorque, dans laquelle le stockage de combustible sous pression (130) comprend des structures de support de cuve (131, 132) opposées s'étendant à partir d'un côté supérieur (113) de la paire d'éléments de châssis longitudinaux et agencées pour suspendre une cuve sous pression allongée (70) dans une orientation latérale, dans laquelle chaque structure de support de cuve (131, 132) comprend une entretoise (133) montée sur un élément de châssis longitudinal (110, 111) respectif et prévue avec un jeu de forme annulaire pour s'étendre sur une circonférence de la cuve sous pression allongée (70), **caractérisée en ce que** chaque structure de support de cuve (131, 132) comprend un cadre qui s'étend latéralement à partir de l'entretoise (133) vers un côté extérieur du stockage de combustible sous pression (130) et fournit un support de col (135) agencé pour monter une extrémité axiale de la cuve sous pression allongée (70) selon un décalage latéral par rapport à l'entretoise (133), dans lequel la cuve sous pression allongée (70) est suspendue uniquement au niveau de ses extrémités axiales et le jeu de forme annulaire empêche le contact entre l'entretoise (133) et la cuve sous pression allongée (70), dans laquelle les entretoises (133) sont agencées pour transférer une force de suspension des supports de col (135) à la paire d'éléments de châssis longitudinaux (110, 111), pour limiter ainsi un mouvement du stockage de combustible sous pression (130) par rapport à la paire d'éléments de châssis longitudinaux (110, 111).

2. Combinaison de camion ou de tracteur semi-remorque (100) selon la revendication 1, dans laquelle les structures de support de cuve (131, 132) opposées fournissent des supports de col supplémentaires (136) agencés pour monter des extrémités axiales d'une ou de plusieurs cuves sous pression allongées supplémentaires (80, 81) au-dessus de la cuve sous pression allongée (70) suspendue de manière latérale, dans laquelle les entretoises (133) sont agencées pour transférer une force de suspension à partir des supports de col supplémentaires (136) à la paire d'éléments de châssis longitudinaux (110, 111).

3. Combinaison de camion ou de tracteur semi-remorque (100) selon la revendication 2, dans laquelle les supports de col supplémentaires (136) sont prévus le long des côtés latéraux opposés du stockage de combustible sous pression (130) et configurés pour monter une paire de cuves sous pression allongées supplémentaires dans une orientation verticale.

4. Combinaison de camion ou de tracteur semi-remorque (100) selon l'une quelconque des revendications précédentes, dans laquelle chaque entretoise (133) est montée sensiblement en plan avec l'élément de châssis longitudinal (110, 111) respectif.

5. Combinaison de camion ou de tracteur semi-remorque (100) selon l'une quelconque des revendications précédentes, comprenant un mécanisme de fixation (140) entre les structures de support de cuve (131, 132) opposées et la paire d'éléments de châssis longitudinaux (110, 111), dans laquelle le mécanisme de fixation (140) comprend des consoles (141) opposées qui raccordent les entretoises (133) à la paire d'éléments de châssis longitudinaux (110, 111).

6. Combinaison de camion ou de tracteur semi-remorque (100) selon la revendication 5, dans laquelle, en amont du stockage de combustible sous pression (130), les consoles (141) opposées sont interconnectées par un pont de cabine (145) agencé pour monter la cabine (120) sur la paire d'éléments de châssis longitudinaux (110, 111), dans laquelle le pont de cabine (145) s'étend latéralement sur et au-dessus de la paire d'éléments de châssis longitudinaux (110, 111) le long d'une ligne sensiblement droite.

7. Combinaison de camion ou de tracteur semi-remorque (100) selon l'une quelconque des revendications précédentes, dans laquelle le stockage de combustible sous pression (130) comprend en outre des supports de système de refroidissement agencés pour monter un système de refroidissement (150) pour refroidir les piles à combustible de la combinaison de camion ou de tracteur semi-remorque, dans laquelle les entretoises (133) sont agencées pour transférer une force de suspension des supports de système de refroidissement à la paire d'éléments de châssis longitudinaux (110, 111).

8. Combinaison de camion ou de tracteur semi-remorque (100) selon la revendication 7, dans laquelle le stockage de combustible sous pression (130) est prévu avec un ou plusieurs capots (151) s'étendant entre les supports de col (135, 136) opposés, dans laquelle chaque capot (151) est agencé pour guider l'air d'admission le long des cuves sous pression allongées (70, 80, 81) suspendues vers le système de refroidissement (150).

9. Combinaison de camion ou de tracteur semi-remorque (100) selon l'une quelconque des revendications précédentes, comprenant une unité de pile à combustible (160) comprenant une ou plusieurs piles à combustible raccordées, de manière opérationnelle, au stockage de combustible sous pression (130), dans laquelle l'unité de pile à combustible (160) est montée au-dessous du stockage de combustible sous pression (130) et s'étend entre la paire d'éléments de châssis longitudinaux (110, 111) dans une direction en aval selon un décalage au-dessous du côté supérieur (113) de la paire d'éléments de châssis longitudinaux.

10. Combinaison de camion ou de tracteur semi-remorque (100) selon l'une quelconque des revendications précédentes, dans laquelle chaque entretoise (133) est prévue avec un jeu de forme annulaire qui est supérieur à un diamètre externe de la cuve sous pression allongée (70), pour permettre la dilatation et la contraction radiale de la cuve sous pression allongée (70) suspendue.

11. Combinaison de camion ou de tracteur semi-remorque (100) selon l'une quelconque des revendications précédentes, dans laquelle le stockage de combustible sous pression (130) comprend une plaque de renforcement (137) qui interconnecte les structures de support de cuve (131, 132) opposées, dans laquelle la plaque de renforcement (137) s'étend latéralement entre les entretoises (133), de manière sensiblement parallèle, au côté supérieur (113) de la paire d'éléments de châssis longitudinaux.

12. Combinaison de camion ou de tracteur semi-remorque (100) selon l'une quelconque des revendications précédentes, comprenant un élément transversal (115) s'étendant latéralement entre la paire d'éléments de châssis longitudinaux (110, 111) en aval du stockage de combustible sous pression (130), dans laquelle l'élément transversal (115) est une plaque de tôle.
